# EUROPÄISCHE PATENTSCHRIFT

(11) **EP 1 622 838 B1**
(45) Veröffentlichungstag und Bekanntmachung des Hinweises auf die Patenterteilung: **08.08.2007**
(21) Anmeldenummer: 04739138.8
(22) Anmeldetag: 06.05.2004
(51) Int. Cl.: C02F 5/12, C08F 220/06, C08F 220/58, C08F 8/34, C08F 20/58

(54) **POLYMERE FÜR DIE WASSERBEHANDLUNG**
POLYMER FOR WATER TREATMENT
POLYMERES POUR LE TRAITEMENT DE L'EAU

(30) Priorität: 06.05.2003 DE 10320388
(43) Veröffentlichungstag der Anmeldung: 08.02.2006
(73) Patentinhaber: BASF Aktiengesellschaft, 67056 Ludwigshafen (DE)
(72) Erfinder: BAUM, Pia, 69469 Weinheim (DE); LUTZ, Erich, 67065 Ludwigshafen (DE); GUZMANN, Marcus, 69242 Mülhausen (DE); BÜCHNER, Karl-Heinz, 68804 Altlussheim (DE); BRODT, Gregor, 64646 Heppenheim (DE)
(74) Vertreter: Isenbruck, Günter
(86) Internationale Anmeldenummer: PCT/EP2004/004809
(87) Internationale Veröffentlichungsnummer: WO 2004/099092

(56) Entgegenhaltungen:
- EP-A- 0 244 584
- EP-A- 0 330 876
- DE-A- 3 123 732
- DE-A- 19 950 941
- US-A- 4 711 725
- US-A- 4 801 388

## Beschreibung

Die vorliegende Erfindung betrifft (Meth)acrylsäurecopolymere, ein Verfahren zu deren Herstellung sowie deren Verwendung zur Wasserbehandlung, bevorzugt bei Kühl- bzw. Wärmeprozessen, und bei der Scaleinhibierung in der Erdölförderung.

Bei der Erdölförderung kommt es während des Förderprozesses durch Temperaturänderungen und Vermischen von Lagerstättenwasser mit Injektionswasser zu Ausfällungen von Carbonaten und Sulfaten der Erdalkalimetalle. Sie verstopfen die Poren der Formation und lagern sich an Rohroberflächen ab, wodurch sie die Förderung erschweren und manchmal unmöglich machen.

In der Wasserbehandlung, bei Kühl- bzw. Wärmeprozessen einschließlich der Meerwasserentsalzung oder allgemein bei Wärmeübertragungsprozessen werden dem jeweiligen Kühl- bzw. Wärmemedium im Allgemeinen Formulierungen zugesetzt, die Korrosion und Ablagerungen in den Kreisläufen verhindern oder zumindest stark verzögern. Hierzu werden Formulierungen verwendet, die je nach Anforderung Zinksalze, Polyphosphate, Phosphonate, Polymere, Biozide und/oder Tenside enthalten.

Zur Beherrschung des Korrosionsschutzes und der Belagsverhinderung in offenen Kühlkreisläufen unterscheidet man prinzipiell zwei Verfahren:

Zum einen kann man phosphorhaltige Formulierungen in den Kühl- bzw. Wärmemedien verwenden. Typische Beispiele hierfür sind Polyphosphate und Phosphonate wie 1-Hydroxyethan-1,1-diphosphonsäure (HEDP), 2-Phosphonobutan-1,2,4-tricarbonsäure (GBTC) und Aminotrimethylenphosphonsäure (ATMP), die jeweils in Form ihrer Natriumsalze verwendet werden. Diese phosphorhaltigen Formulierungen bewirken im Allgemeinen eine Härtestabilisierung. Polyphosphate verbessern darüber hinaus die Korrosionsinhibierung.
Alternativ können in Kühl- und Wärmemedien auch Zinksalze eingesetzt werden, wobei die darin enthaltenen Zinkionen hauptsächlich zum Schutz von Stahl dienen.

In einigen Fällen werden den Phosphonaten auch Zinksalze in geringen Mengen zugesetzt, um neben einer Härtestabilisierung gleichzeitig den verwendeten Stahl zu schützen.

Die Wirkungen dieser Zusätze werden durch geeignete Polymere unterstützt:

Geeignete Polymere können zum einen die Wirkung von Phosphonaten zur Härtestabilisierung unterstützen und zum anderen können sie auch Polyphosphate stabilisieren, insbesondere wenn diese in hohen Konzentrationen zugesetzt werden. Dadurch werden Calciumphosphat-Ausfällungen verhindert. Ferner können geeignete Polymere auch Zinkverbindungen stabilisieren, so dass es nicht zu Ablagerungen auf der Metalloberfläche und damit zu einer Zerstörung des Schutzfilms kommt. Die korrosionsinhibierende Wirkung wird im Beispiel von Phosphonaten so erklärt, dass sich ein Film auf der Metalloberfläche bildet. Dadurch wird der Stahl vom Kühl- bzw. Wärmemedium getrennt. Der sich bildende Film besteht größtenteils aus Eisen(II)- und Calcium-Ionen und dem eingebauten Phosphonat. Er ist extrem dünn, so dass eine Stabilisierung gewährleistet sein muss, damit es nicht zum Zusammenbruch kommt und an einzelnen Stellen Korrosion auftreten kann.

Zur Stabilisierung von Phosphonaten und Phosphaten geeignete Polymere sind grundsätzlich aus dem Stand der Technik bekannt.

So beschreibt beispielsweise die EP-A 0 244 584 N-substituierte Acrylamide, die Sulfoethylamid-Gruppen tragen und zur Korrosionsinhibierung von industriellen Kühlkreisläufen verwendet werden. Die Herstellung dieser N-substituierten Acrylamide erfolgt durch Umamidierung von polymeren Acrylamiden. Die N-substituierten Acrylamide gemäß EP-A 0 244 584 inhibieren die Phosphationen, nicht aber die Phosphonationen.

Die EP-B 0 330 876 beschreibt zur EP-A 0 244 584 strukturanaloge N-substituierte Acrylamide. Die Anwendung gemäß EP-B 0 330 876 dieser N-substituierten Acrylamide bezieht sich allerdings auf die Stabilisierung von Eisen in wässrigen Systemen.

Die US 4,801,388 beschreibt Verfahren zur Verhinderung von Abscheidungen in wässrigen Systemen durch Zugabe von Polymeren auf Basis von (Meth)acrylsäure und Sulfoalkyl(meth)acrylamid bzw. (Meth)acrylamid.

Die DE-A-199 50 941 betrifft die Verwendung von Polymerisaten der Acrylsäure als Inhibitoren für Calciumsulfat-Beläge bei der Holzstoffherstellung und der Altpapieraufarbeitung. Diese Polymere werden durch radikalische Polymerisation von Acrylsäure mit gegebenenfalls mindestens einem anderen, mit Acrylsäure polymerisierbaren ethylenisch ungesättigten Monomer in Isopropanol hergestellt.

Die Polymere des oben genannten Standes der Technik haben den Nachteil, dass sie bei höheren Calciumkonzentrationen ausfallen. Insbesondere bei der gemeinsamen Verwendung von Phosphonat- und Zinkionen in Kühl- bzw. Wärmekreisläufen sind darüber hinaus Polymere vorteilhaft, die sowohl auf Phosphonationen als auch auf Zinkionen gleichzeitig stabilisierend wirken. Ferner sind Polymere vorteilhaft, die bei Verwendung von Polyphosphat-Zusätzen und insbesondere bei Vorhandensein von Calciumionen in hoher Konzentration, eine Ausfällung von Calciumphosphat verhindern. Schließlich sind Polymere wünschenswert, die Feststoffpartikel im Allgemeinen dispergieren, so dass deren Ablagerung auf den Metalloberflächen der Kühl- bzw. Wärmesysteme vermieden wird. Diese Anforderungen werden von den Polymeren des Standes der Technik nicht oder nur unzureichend erfüllt.

Aufgabe der vorliegenden Erfindung ist somit die Bereitstellung von Polymeren, die in Kühl- bzw. Wärmekreisläufen in dem jeweiligen Medium die härtestabilisierende Wirkung von Phosphonaten unterstützen und gleichzeitig Polyphosphate stabilisieren, so dass es beispielsweise in Gegenwart von Calciumionen nicht zu Ausfällungen kommt. Darüber hinaus sollen die erfindungsgemäßen Polymere Zinkverbindungen stabilisieren, so dass diese keine Ablagerungen auf den Metalloberflächen von Kühl- bzw. Wärmekreisläufen bilden.

Erfindungsgemäß wird diese Aufgabe durch (Meth)acrylsäurecopolymere gelöst, die
(a) 50 bis 80 Gew.-%, vorzugsweise 50 bis 75 Gew.-%, besonders bevorzugt 55 bis 70 Gew.-%, eines Poly(meth)acrylsäure-Grundgerüsts,
(b) 1 bis 40 Gew.-%, vorzugsweise 5 bis 20 Gew.-%, besonders bevorzugt 7 bis 15 Gew.-%, mindestens einer an das Grundgerüst gebundenen und/oder in das Grundgerüst eingebundenen (bzw. eingebundener) Einheit ausgewählt aus der Gruppe, bestehend aus Isobuteneinheiten, Terelactoneinheiten und Isopropanoleinheiten und
(c) mindestens 5 Gew.-%, vorzugsweise 5 bis 40 Gew.-%, besonders bevorzugt 10 bis 30 Gew.-%, Amideinheiten auf Basis von Aminoalkylsulfonsäuren umfassen,
wobei das Gesamtgewicht der Einheiten in dem (Meth)acrylsäurecopolymer 100 Gew.-% beträgt und alle Gewichtsangaben auf das (Meth)acrylsäurecopolymer bezogen sind.

Die erfindungsgemäßen (Meth)acrylsäurecopolymere verhindern bereits im unterstöchiometrischen Bereich, dass zu viele Calciumionen in den Film auf den Metalloberflächen von beispielsweise Kühl- bzw. Wärmekreisläufen eindringen.

Unter dem Begriff (Meth)acrylsäurecopolymere werden im Sinne der vorliegenden Erfindung Methacrylsäurepolymere, Acrylsäurepolymere und gemischte Polymere aus Methacrylsäure und Acrylsäure verstanden. In einer bevorzugten Ausführungsform der vorliegenden Erfindung umfasst das erfindungsgemäße Polymer ein Polyacrylsäure-Grundgerüst.

Unter Terelactoneinheiten versteht man im Sinne der vorliegenden Erfindung Einheiten der folgenden Struktur:

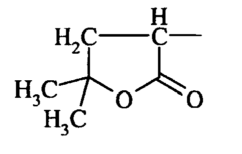

Das gewichtsmittlere Molekulargewicht der erfindungsgemäßen (Meth)acrylsäurecopolymere beträgt vorzugsweise 1.000 bis 20.000 g/mol, besonders bevorzugt 1.500 bis 10.000 g/mol, insbesondere 2.000 bis 6.000 g/mol. Die Bestimmung des gewichtsmittleren Molekulargewichts erfolgt dabei durch Gel-Permeations-Chromatographie (= GPC) bei Raumtemperatur mit wässrigen Elutionsmitteln.

Die erfindungsgemäßen (Meth)acrylsäurecopolymere weisen einen K-Wert von vorzugsweise 5 bis 50, besonders bevorzugt 8 bis 35, insbesondere 11 bis 16, auf. Der K-Wert wurde nach Fikentscher (ISO 174, DIN 53726) bestimmt.

Gegebenenfalls können die erfindungsgemäßen (Meth)acrylsäurecopolymere zusätzlich Einheiten von anderen, mit (Meth)acrylsäure copolymerisierbaren ethylenisch ungesättigten Monomeren enthalten. Hierfür geeignete Monomere sind beispielsweise monoethylenisch ungesättigte Carbonsäuren wie Maleinsäure, Fumarsäure, Itaconsäure, Mesaconsäure, Methylenmalonsäure und Citraconsäure. Weitere copolymerisierbare Monomere sind C₁- bis C₄-Alkylester von monoethylenisch ungesättigten Carbonsäuren wie Acrylsäuremethylester, Acrylsäureethylester, Methacrylsäuremethylester, Methacrylsäureethylester, Hydroxyethylacrylat, Hydroxyethylmethacrylat, Hydroxypropylacrylat, Hydroxypropylmethacrylat und Hydroxybutylacrylat. Als Monomere eignen sich außerdem Alkylpolyethylenglykol(meth)acrylate, die sich von Polyalkylenglykolen mit 2 bis 50 Ethylenglykoleinheiten ableiten, Monoallylether von Polyethylenglykolen mit 2 bis 50 Ethylenglykoleinheiten und Allylalkohol. Weitere geeignete Monomere sind Acrylamid, Methacrylamid, N-Vinylformamid, Styrol, Acrylnitril, Methacrylnitril und/oder Sulfonsäuregruppen tragende Monomere sowie Vinylacetat, Vinylpropionat, Allylphosphonat, N-Vinylpyrrolidon, N-Vinylcaprolactam, N-Vinylimidazol, N-Vinyl-2-methylimidazolin, Diallyldimethylammoniumchlorid, Dimethylaminoethylacrylat, Diethylaminoethylacrylat, Dimethylaminoethylmethacrylat und Diethylaminoethylmethacrylat. Die basischen Monomere wie Dimethylaminoethylmethacrylat können beispielsweise in Form der freien Basen, als Salze mit starken Säuren wie mit Salzsäure, Schwefelsäure oder Phosphorsäure oder in Form von quarternierten Verbindungen als Comonomere verwendet werden. Ebenso können die oben genannten Säuregruppen enthaltenden Monomere in Form der freien Säuren oder als Salze, beispielsweise der Natrium-, Kalium- oder Ammoniumsalze, bei der Polymerisation eingesetzt werden.

Das erfindungsgemäße (Meth)acrylsäurecopolymer weist mindestens eine an das Poly-(meth)acrylsäure-Gundgerüst gebundene Einheiten ausgewählt aus der Gruppe, bestehend aus Isobuteneinheiten, Terelactoneinheiten und Isopropanoleinheiten auf.

Wenn Isobuteneinheiten in dem erfindungsgemäßen Polymer enthalten sind, dann beträgt ihre Menge beispielsweise 0,5 bis 3,0 Mol-%. In weiteren Ausführungsformen kann die Menge an vorhandenen Isobuteneinheiten 0,8 bis 2,5 Mol-% oder 1,0 bis 2,0 Mol-% betragen.

Die Terelactoneinheiten können sowohl endständig als auch in der Polymerkette vorliegen.

Die erfindungsgemäßen (Meth)acrylsäurecopolymere weisen vorzugsweise zusätzlich mindestens eine der folgenden Struktureinheiten auf:

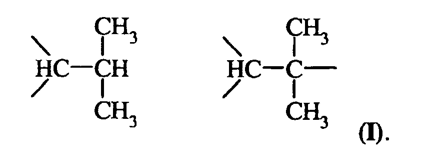

Die Amideinheiten auf Basis von Aminoalkylsulfonsäuren können von jeder beliebigen Aminoalkylsulfonsäure abgeleitet werden. Besonders geeignete Aminoalkylsulfonsäuren sind solche mit 2 bis 12, vorzugsweise 4 bis 10 Kohlenstoffatomen. Die Aminogruppen können primär, sekundär oder tertiär sein. Als weitere Substituenten können die Aminoalkylsulfonsäuren beispielsweise Hydroxy- oder Alkoxygruppen oder Halogenatome aufweisen. Die Alkylgruppen können ungesättigt oder vorzugsweise gesättigt, gerade oder verzweigt oder zum Ring geschlossen sein. Die Aminogruppen können innerhalb der Kette der Aminoalkylgruppen oder als seiten- oder endständige Substituenten angeordnet sein. Sie können auch Bestandteil eines vorzugsweise gesättigten heterocyclischen Ringes sein.

In einer bevorzugten Ausführungsform der vorliegenden Erfindung enthält das erfindungsgemäße (Meth)acrylsäurecopolymer die Struktureinheit (II) auf Basis von Aminoethansulfonsäure (Taurin):

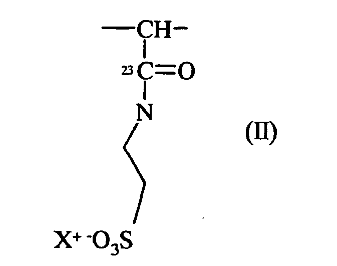

Im Allgemeinen können die Sulfonatreste der (Meth)acrylsäurecopolymere mit jedem beliebigen Gegenion abgestättigt sein. Vorzugsweise ist das Gegenion ausgewählt aus der Gruppe, bestehend aus Protonen, Alkaliionen oder Ammoniumionen.

Die Sulfoalkylamid-Struktureinheiten sind in dem (Meth)acrylsäurecopolymer vorzugsweise statistisch verteilt.

Die erfindungsgemäßen (Meth)acrylsäurecopolymere unterscheiden sich in ihrer Wirkungsweise in der Wasserbehandlung, Scaleinhibierung und im Korrosionsschutz deutlich von den reinen (Meth)acrylsäure/Sulfoethylacrylamid-Copolymeren, (Meth)acrylsäure/Acrylamid/Sulfoethylacrylamid-Terpolymeren als auch von Copolymeren aus Acrylsäure und 2-Acrylamido-2-methylpropansulfonsäure (AMPS) des Standes der Technik. Sie weisen insbesondere eine größere Inhibierung auf Calciumphosphat und -phosphonat auf.

Diese charakteristische Wirkungsweise ist bedingt durch die Polymereinheiten, die durch den Einbau des Isopropanols bzw. den daraus resultierenden Isobuten- oder TerelactonEinheiten entstehen und gegebenenfalls durch die vorzugsweise statistische Verteilung der Sulfoalkylamid-Struktureinheiten.

Weiterer Gegenstand der vorliegenden Erfindung ist ein Verfahren zur Herstellung von (Meth)acrylsäurecopolymeren, das durch die folgenden Verfahrensschritte gekennzeichnet ist:
(1) radikalische Polymerisation von (Meth)acrylsäure in Gegenwart von Isopropanol und gegebenenfalls Wasser, wobei ein Polymer I resultiert, und
(2) Amidierung des aus Verfahrensschritt (1) stammenden Polymers I durch Umsetzung mit mindestens einer Aminoalkansulfonsäure.

Dieses Verfahren eignet sich beispielsweise zur Herstellung der oben beschriebenen erfindungsgemäßen (Meth)acrylsäurecopolymere.

Der Verfahrensschritt (1) wird bei Temperaturen von vorzugsweise 100 bis 200°C, besonders bevorzugt 105 bis 135°C, insbesondere 120 bis 125°C, durchgeführt.

Verfahrensschritt (1) wird vorzugsweise in einem geschlossenen Reaktionsgefäß, beispielsweise einem Autoklaven, durchgeführt. Der Druck in Verfahrensschritt (1) ergibt sich somit im Allgemeinen durch den Dampfdruck (Eigendruck) von Isopropanol und gegebenenfalls Wasser bei den oben genannten Temperaturen. Unabhängig davon kann gegebenenfalls auch unter zusätzlichem Druck oder aber unter vermindertem Druck gearbeitet werden.

Der Verfahrensschritt (1) wird vorzugsweise in Isopropanol oder in mindestens 20 Gew.-%, besonders bevorzugt mindestens 25 Gew.-%, insbesondere mindestens 30 Gew.-%, Isopropanol enthaltenden wässrigen Lösungen durchgeführt.

Die radikalische Polymerisation der Monomere erfolgt vorzugsweise unter Verwendung von Wasserstoffperoxid als Initiator. Als Polymerisationsinitiatoren können aber auch alle Verbindungen verwendet werden, die unter den Reaktionsbedingungen Radikale bilden, beispielsweise Peroxide, Hydroperoxide, Peroxidisulfate, Peroxodicarbonsäuren, Peroxicarbonsäureester und /oder Azoverbindungen.

Gegebenenfalls können in Verfahrensschritt (1) des erfindungsgemäßen Verfahrens zusätzlich weitere Monomere verwendet werden, beispielsweise mit (Meth)acrylsäure copolymerisierbare ethylenisch ungesättigte Monomere. Geeignete Copolymerisate sind beispielsweise monoethylenisch ungesättigte Carbonsäuren wie Maleinsäure, Fumarsäure, Itaconsäure, Mesaconsäure, Methylenmalonsäure und Citraconsäure. Weitere copolymerisierbare Monomere sind C₁- bis C₄-Alkylester von monoethylenisch ungesättigten Carbonsäuren wie Acrylsäuremethylester, Acrylsäureethylester, Methacrylsäuremethylester, Methacrylsäureethylester, Hydroxyethylacrylat, Hydroxyethylmethacrylat, Hydroxypropylacrylat, Hydroxypropylmethacrylat und Hydroxybutylacrylat. Als Comonomere eignen sich außerdem Alkylpolyethylenglykol(meth)acrylate, die sich von Polyalkylenglykolen mit 2 bis 50 Ethylenglykoleinheiten ableiten, Monoallylether von Polyethylenglykolen mit 2 bis 50 Ethylenglykoleinheiten und Allylalkohol. Weitere geeignete Monomere sind Acrylamid, Methacrylamid, N-Vinylformamid, Styrol, Acrylnitril, Methacrylnitril und/oder Sulfonsäuregruppen tragende Monomere sowie Vinylacetat, Vinylpropionat, Allylphosphonat, N-Vinylpyrrolidon, N-Vinylcaprolactam, N-Vinylimidazol, N-Vinyl-2-methylimidazolin, Diallyldimethylammoniumchlorid, Dimethylaminoethylacrylat, Diethylaminoethylacrylat, Dimethylaminoethylmethacrylat und Diethylaminoethylmethacrylat. Die basischen Monomere wie Dimethylaminoethylmethacrylat können beispielsweise in Form der freien Basen, als Salze mit starken Säuren wie mit Salzsäure, Schwefelsäure oder Phosphorsäure oder in Form von quarternierten Verbindungen als Comonomere verwendet werden. Ebenso können die oben genannten Säuregruppen enthaltenden Monomeren in Form der freien Säuren oder als Salze, beispielsweise der Natrium-, Kalium- oder Ammoniumsalze bei der Polymerisation eingesetzt werden.

In einer besonderen Ausführungsform der vorliegenden Erfindung beträgt der Anteil an (Meth)acrylsäure im Polymer I 75 bis 95 Gew.-%, vorzugsweise 80 bis 90 Gew.-%, besonders bevorzugt 82,5 bis 87,5 Gew.-%. Der Anteil an Einheiten basierend auf Isopropanol im Polymer I beträgt dann vorzugsweise 5 bis 25 Gew.-%, besonders bevorzugt 10 bis 20 Gew.-%, insbesondere 12,5 bis 17,5 Gew.-%.

Das durch Verfahrensschritt (1) des erfindungsgemäße Verfahren erhältliche Polymer I weist gegebenenfalls Isobuteneinheiten in einer Menge von vorzugsweise 0,5 bis 3,0 Mol-%, besonders bevorzugt 0,8 bis 2,5 Mol-%, insbesondere 1,0 bis 2,0 Mol-%, auf. Die Isobuteneinheiten können dabei gegebenenfalls endständig im Polymer I angeordnet sein.

In einer weiteren Ausführungsform der vorliegenden Erfindung enthält das Polymer I Terelactoneinheiten, die endständig oder in der Polymerkette des Polymers I angeordnet sind.

In einer weiteren Ausführungsform der vorliegenden Erfindung enthält das Polymer I sowohl Isobuteneinheiten als auch Terelactoneinheiten.

Das erfindungsgemäße Verfahren kann vorzugsweise so ausgeführt werden, dass das (Meth)acrylsäurecopolymer Sulfonatgruppen mit einem Gegenion aufweist, das ausgewählt ist aus der Gruppe bestehend aus Protonen, Alkaliionen oder Ammoniumionen. Allerdings können im Allgemeinen die Sulfonatreste der (Meth)acrylsäurecopolymere mit jedem beliebigen Gegenion abgesättigt sein.

Das in Verfahrensschritt (1) des erfindungsgemäßen Verfahrens erhältliche Polymer I wird vorzugsweise in einer Polymerlösung erhalten, die einen Feststoffgehalt von vorzugsweise 10 bis 70 %, besonders bevorzugt 30 bis 60 %, insbesondere 45 bis 55 %, aufweist.

In einer besonderen Ausführungsform des erfindungsgemäßen Verfahrens wird vor der Amidierung des Polymers I in Verfahrensschritt (2) die das Polymer I enthaltende Polymerlösung auf einen pH-Wert von vorzugsweise 2,0 bis 9,0, besonders bevorzugt 4,0 bis 7,5, insbesondere 4,5 bis 6,5 eingestellt. Hierfür eignen sich prinzipiell alle Basen, vorzugsweise werden jedoch wässrige Lösungen von Alkalihydroxiden, beispielsweise wässrige Natronlauge, verwendet.

Die Amidierung (Verfahrensschritt (2)) wird vorzugsweise unter einer Schutzgasatmosphäre durchgeführt, beispielsweise unter Verwendung von Argon oder Stickstoff.

Der Verfahrensschritt (2) des erfindungsgemäßen Verfahrens wird vorzugsweise bei Temperaturen von 140 bis 250°C, besonders bevorzugt 165 bis 200°C, insbesondere 175 bis 185°C, durchgeführt. Dabei beträgt das Molverhältnis von Monomereinheiten in Polymer I zu Aminoalkansulfonsäure vorzugsweise 15 zu 1 bis 2 zu 1, besonders bevorzugt 11 zu 1 bis 3 zu 1, insbesondere 8 zu 1 bis 4 zu 1. Der Druck in Verfahrensschritt (2) beträgt vorzugsweise 1 bis 25 bar, besonders bevorzugt 5 bis 17 bar, insbesondere 7 bis 13 bar.

Das durch das erfindungsgemäße Verfahren aus Verfahrensschritt (2) resultierende (Meth)-acrylsäurecopolymer weist vorzugsweise mindestens eine der folgenden Struktureinheiten basierend auf Isopropanol auf:

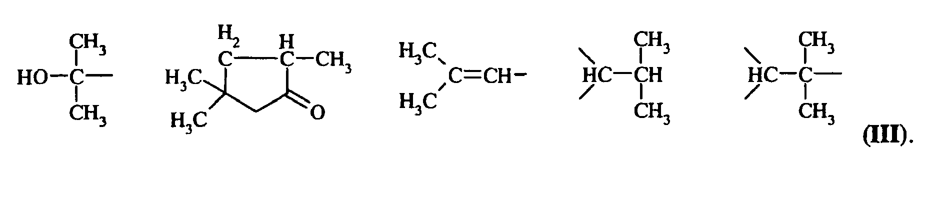

Besonders bevorzugt weist das durch das erfindungsgemäße Verfahren erhältliche (Meth)-acrylsäurecopolymer Isobuteneinheiten und/oder Terelactoneinheiten auf. Die Isobuteneinheiten sind dabei im (Meth)acrylsäurecopolymer vorzugsweise endständig angeordnet, während die Terelactoneinheiten sowohl endständig als auch in der Polymerkette vorliegen können.

Die Bildung dieser unterschiedlichen Struktureinheiten erfolgt im Allgemeinen gemäß dem folgenden Reaktionsschema (IV):

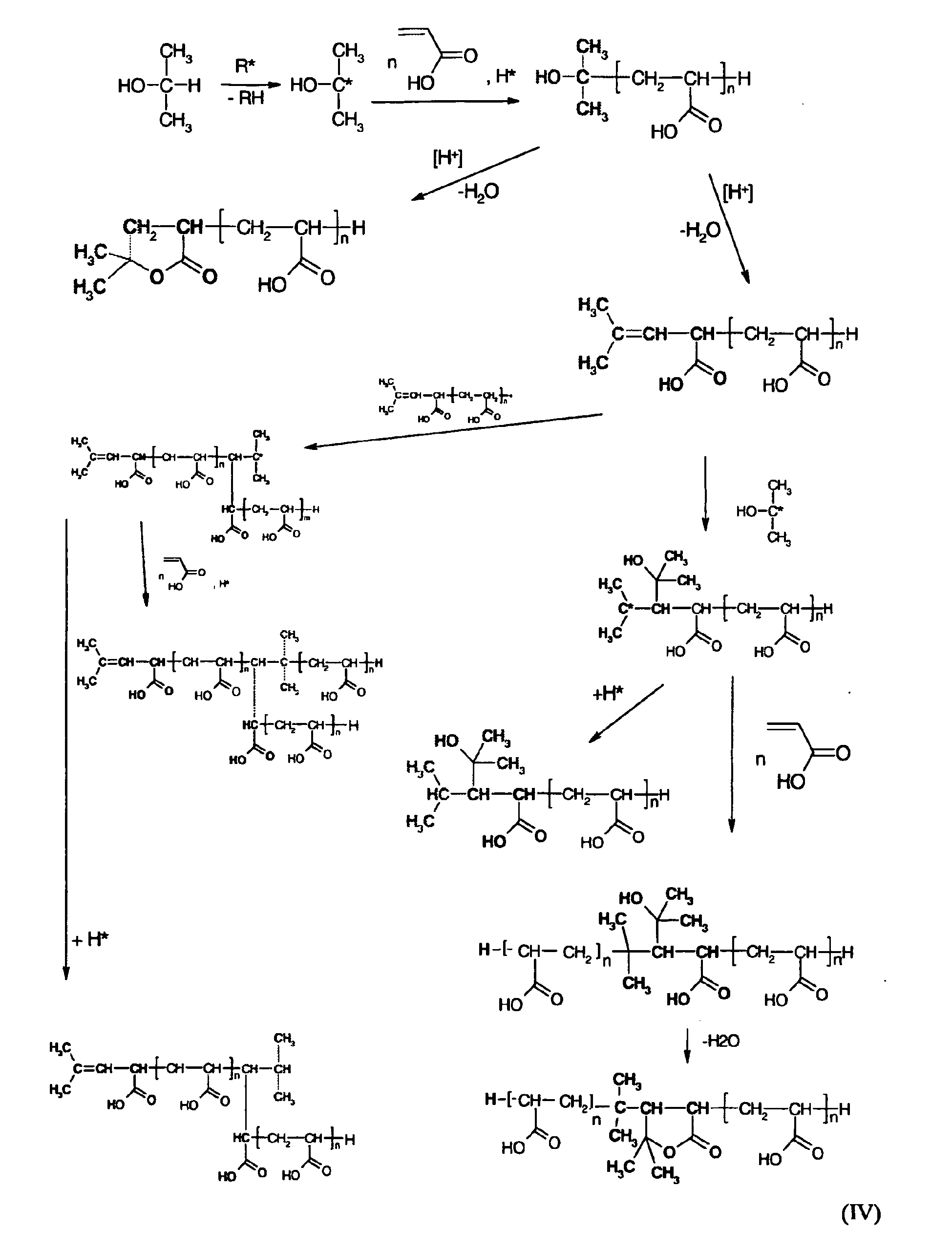

Das durch das erfindungsgemäße Verfahren erhältliche (Meth)acrylsäurecopolymer hat vorzugsweise ein gewichtsmittleres Molekulargewicht von 1.000 bis 20.000 g/mol, besonders bevorzugt 1.500 bis 10.000 g/mol, insbesondere 2.000 bis 6.000 g/mol. Die Bestimmung des gewichtsmittleren Molekulargewichts erfolgt dabei durch Gel-Permeations-Chromatographie (= GPC) bei Raumtemperatur mit wässrigen Elutionsmitteln.

In einer besonderen Ausführungsform des erfindungsgemäßen Verfahrens wird als Aminoalkylsulfonsäure Aminoethylsulfonsäure verwendet, so dass das aus Verfahrensschritt (2) resultierende Polymer Einheiten auf Basis von Aminoethylsulfonsäure aufweist. Allerdings können auch beliebig andere Aminoalkylsulfonsäuren verwendet werden. Diesbezüglich wird auf obige Ausführungen verwiesen.

In einer besonderen Ausführungsform des erfindungsgemäßen Verfahrens werden (Meth)-acrylsäurecopolymere hergestellt, die
(a) 50 bis 80 Gew.-%, vorzugsweise 50 bis 75 Gew.-%, besonders bevorzugt 55 bis 70 Gew.-%, eines Poly(meth)acrylsäure-Grundgerüsts,
(b) 1 bis 40 Gew.-%, vorzugsweise 5 bis 20 Gew.-%, besonders bevorzugt 7 bis 15 Gew.-%, mindestens einer an das Grundgerüst gebundenen Einheit ausgewählt aus der Gruppe, bestehend aus Isobuteneinheiten, Terelactoneinheiten und Isopropanoleinheiten und

(a) mindestens 5 Gew.-%, vorzugsweise 5 bis 40 Gew.-%, besonders bevorzugt 10 bis 30 Gew.-%, Amideinheiten auf Basis von Aminoalkylsulfonsäure enthalten,
wobei das Gesamtgewicht der Einheiten in dem (Meth)acrylsäurecopolymer 100 Gew.-% beträgt und alle Gewichtsangaben auf das erfindungsgemäße (Meth)acrylsäurecopolymer bezogen sind. Weitere besondere Ausgestaltungen sind bereits bei der Beschreibung der erfindungsgemäßen Poly(meth)acrylsäurecopolymere erwähnt.

Die durch Verfahrensschritt (2) des erfindungsgemäßen Verfahrens erzeugten Sulfoalkylamid-Struktureinheiten sind in dem (Meth)acrylsäurecopolymer vorzugsweise statistisch verteilt:

Durch den Reaktionstyp der radikalischen Polymerisation in Verfahrensschritt (1) wird die Verteilung der Sulfoalkylamid-Einheiten zwischen den einzelnen Polymermolekülen und entlang einer Polymerkette entscheidend beeinflusst. So wird im Allgemeinen ein Gemisch anders strukturierter Polymerketten erhalten, als durch die radikalische Copolymerisation von Monomeren entsprechender Struktur. So können sich polymeranalog hergestellte Polymere deutlich von Polymeren, die durch die radikalische Copolymerisation des Monomers Acrylamid mit Acrylsäure und anschließender Umamidierung der Amideinheiten mit Aminoalkylsulfonsäure erhalten werden, unterscheiden. Auch eine radikalische Copolymerisation von Acrylsäure, Terelactonsäure und Acrylamid mit anschließender Umamidierung führt im Allgemeinen zu anderen Strukturen. Bei den zuletzt beschriebenen Polymerisationen wird die Verteilung der Sulfoalkylamid-Einheiten durch die Copolymerisationsparameter der bei der radikalischen Copolymerisation eingesetzten Monomere vorbestimmt. Im Ergebnis ist die Statistik der Verteilung unterschiedlicher funktioneller Gruppen am Polymerrückgrat bei polymeranalog synthetisierten Polymeren im Allgemeinen eine andere als bei Einführung entsprechender Gruppen durch radikalische Copolymerisation.

Weiterer Gegenstand der vorliegenden Erfindung sind (Meth)acrylsäurecopolymere, die nach dem oben beschriebenen Verfahren erhalten werden.

Darüber hinaus betrifft die vorliegende Erfindung ein Verfahren zur Stabilisierung von Phosphaten und/oder Phosphonaten und/oder Zinkionen, beispielsweise Zinkchlorid oder Zinkphosphat, in wässrigen Systemen, wobei dem System mindestens ein erfindungsgemäßes (Meth)acrylsäurecopolymer und/oder mindestens ein durch das erfindungsgemäße Verfahren erhältliches (Meth)acrylsäurecopolymer zugesetzt wird. Dabei beträgt die Menge des Polymers in dem wässrigen System vorzugsweise von 5 bis 200 ppm, besonders bevorzugt 5 bis 50 ppm, insbesondere 10 bis 40 ppm, jeweils bezogen auf das wässrige System.

Die erfindungsgemäßen Polymere können dem wässrigen System über eine oder mehrere Dosierstellen direkt zudosiert werden oder aber in Mischung mit einer anderen Komponente eingebracht werden.

Die oben beschriebenen erfindungsgemäßen (Meth)acrylsäurecopolymere und/oder durch das erfindungsgemäße Verfahren erhältlichen (Meth)acrylsäurecopolymere können zur Wasserbehandlung, Scaleinhibierung bei der Erdölförderung und/oder zur Korrosionsinhibierung in wässrigen Systemen verwendet werden.

Gegebenenfalls kann es sinnvoll sein, die erfindungsgemäßen (Meth)acrylsäurecopolymere in Formulierungen zu verwenden. Weiterer Gegenstand der vorliegenden Erfindung sind somit Formulierungen zur Wasserbehandlung, Scaleinhibierung bei der Erdölförderung und/oder zur Korrosionsinhibierung, die mindestens ein erfindungsgemäßes (Meth)acrylsäurecopolymer und/oder mindestens ein durch das erfindungsgemäße Verfahren erhältliches (Meth)acrylsäurecopolymer enthalten. Dabei enthalten die erfindungsgemäßen Formulierungen gegebenenfalls weitere Bestandteile. Solche Formierungsbestandteile sind beispielsweise:
a) Kondensierte lineare und ringförmige Polyphosphate, wie Natriumtriphosphat, Natriumhexametaphosphat;
b) Phosphonate, wie 2-Phosphonobutan-1,2,4-tricarbonsäure, Aminotri-(methylenphosphonsäure), 1-Hydroxyethylen(1,1-diphosphonsäure), Ethylendiamin-tetramethylen-phosphonsäure, Hexamethylendiamin-tetramethylen-phosphonsäure oder Diethylentriamin-pentamethylen-phosphonsäure,
c) Aminocarboxylate wie Nitrilotriessigsäure, Ethylendiamintetraessigsäure, Diethylentriaminpentaessigsäure, Hydroxyethylethylendiamintriessigsäure, Methylglycindiessigsäure, Gluconat, Gluconheptonat, Ethylendiamindisuccinat und Imindisuccinat;
d) wasserlösliche Polymere, wie Homo- und Copolymere von sulfongruppenhaltigen Monomeren, wie 2-Acrylamido-2-methylpropansulfonsäure, Styrolsulfonsäure oder Vinylsulfonsäure mit einem gewichtsmittleren Molekulargewicht von 500 bis 15.000 oder Naphthalinsulfonsäure-Formaldehyd-Polykondensate,
nebst weiteren Formulierungsbestandteilen wie Tensiden, Dispergiermitteln, Entschäumern, Korrosionsinhibitoren, Sauerstoffängern und Bioziden.

Die Formulierung, die das inhibierend bzw. dispergierend wirkende Polymer enthält, kann sowohl direkt dem wässrigen System über eine oder mehrere Dosierstellen zudosiert werden.

Die vorliegende Erfindung wird anhand der folgenden Beispiele verdeutlicht.

### AUSFÜHRUNGSBEISPIELE:

### 1.) Herstellung erfindungsgemäßer Polymere

a) Es wird ein Polymer aus Isopropanol-Bausteinen und Acrylsäure gemäß der DE-A 199 50 941 hergestellt (Verfahrensschritt (1)).
b) In einem druckstabilen Reaktionskessel mit Rührer, Stickstoffzufuhr, Temperaturfühler, Druckanzeige und Entlüftungsmöglichkeit wird eine Mischung aus 1.000 g der Polymerlösung aus a) (Feststoffgehalt = 50 %) und 96,56 g Taurin (Aminoethansulfonsäure) gefüllt. Diese Mischung wird mit 427 g einer 50%igen wässrigen Natronlauge auf einen pH-Wert von 5.0 eingestellt. Die Apparatur wird drei Mal mit Stickstoff gespült und geschlossen. Dann wird das Gemisch unter Rühren auf eine Innentemperatur von 180°C erhitzt. Dabei baut sich ein Druck von ca. 12 bar auf. Bei dieser Temperatur wird das Gemisch für 5 Stunden gehalten. Dann wird die Mischung ohne Entspannung abgekühlt. Die Apparatur wird geöffnet und auf einen pH-Wert von 7,2 eingestellt. Es wird eine klare gelbe Lösung mit einem Feststoffgehalt von 47,6 % und einem K-Wert von 12,7 (1%ig in 3 % NaCl-Lösung) erhalten.
c) Die Umsetzung erfolgt analog zu Beispiel b), nur dass anfangs 217,27 g Taurin und 266 g der 50%igen Natronlauge eingesetzt wurde. Es wird eine klare gelbe Lösung mit einem Feststoffgehalt von 50 % und einem K-Wert von 11,9 (1%ig in 3 % NaCl-Lösung) erhalten.

### 2.) Verwendung von Polymeren zur Inhibierung von Calciumphosphat und Calciumphosphonat

### a) Calciumphosphat-Inhibierung

Grundlage ist die Prüfung der Inhibierungswirkung von Polymeren für die Anwendung in Kühlwasserkreisläufen.

| | | |
|---|---|---|
| Geräte: | Dr. Lange Photometer, Typ LP2W | |
| | Filter 435 nm | |
| | Absaugvorrichtung mit Membranfilter 0,45 µm | |
| | Schüttelwasserbad (GFL-Modell 1083) | |
| | 300 ml-Lupolen-Becher (verschließbar) | |
| | Einmalküvetten (4 ml, Ratiolab) | |
| | Waage Sartorius Typ LC 4800 - P | |
| Reagenzien: | Vanadat/Molybdat - Reagenz zur Phosphatbestimmung (Merck) | |
| | Testlösung A: | 0,42 g H₃PO₄-Lösung (5 %), auf 1 l mit dest. |
| | | Wasser auffüllen |
| | Testlösung B: | 1,64 g/l CaCl₂ · 6 H₂O |
| | | 0,79 g/l MgSO₄ · 7 H₂O |
| | | 1,08 g/l NaHCO₃ |
| | Polymerlösung: | 0,1%ig, bezogen auf Wirksubstanz |
| Durchführung: | 100 ml der Testlösung A werden in die Lupolen-Becher vorgelegt, 2 - 4 ml 0,1%ige Polymerlösung zudosiert (10 - 20 ppm) und anschließend 100 ml der Testlösung B zugefügt. Nach Verschließen der Becher stellt man sie 24 h bei 70°C in das Schüttelbad. Nach dem Abkühlen (ca. 1 h) werden die Probelösungen über Membranfilter (0,45 *µ*m) abgesaugt. 50 ml der abgesaugten Lösung nimmt man nun zur Bestimmung der Rest-Phosphatmenge, indem man 10 ml des Vanadat/Molybdat-Reagenz hinzugefügt. Nach 10-minütiger Reaktionszeit kann man nun am Photometer den Phosphatgehalt anhand von Eichkurven bestimmen. | |

### Konzentration

| | | |
|---|---|---|
| der Prüflösung: | GH | = 5,4 mmol/l |
| | KH | = 6,42 mmol/l |
| | PO₄ | = 10 ppm |
| | Polymer | =10 - 20 ppm Wirksubstanz |

**Tabelle: Inhibierung [%]**

| Konzentration | 15 ppm | 20 ppm | 25 ppm |
|---|---|---|---|
| Taurin-modifiziertes Polymer (erfindungsgemäß) | 87 | 92 | 100 |
| Noramer 2000 (Rohm & Haas) (nicht erfindungsgemäß) | 73 | 87 | 96 |

### b) Calciumphosphonat - Inhibierung

Grundlage ist die Prüfung der Inhibierungswirkung von Polymeren für die Anwendung in Kühlkreisläufen.

| | |
|---|---|
| Geräte: | Dr. Lange Photometer Typ LP 2 W, Filter 800 nm |
| | Absaugvorrichtung mit Membranfilter 0,45 *µ*m |
| | Schüttelwasserbad (GFL-Modell 1083) |
| | 300 ml Lupolen-Becher (verschließbar) |
| | Dr. Lange Fertigtest LCK 350 |
| | Waage Sartorius Typ LC 4800 - P |
| Reagenzien: | Testlösung A: |
| | 2,2 g/l HEDP 1%ig WS (Dequest 2010), bzw. 5,7 g/l PBTC 1%ig |
| | WS (Bayhibit AM) oder 2,1 g/l ATMP 1 %ig WS (Dequest 2000), |
| | auf 11 mit dest. Wasser auffüllen |
| | Testlösung B: |
| | 1,64 g/l CaCl₂ . 6 H₂O |
| | 0,79 g/l M_{g}SO₄ · 7 H₂O |
| | 1,08 g/l NaHCO₃ |
| | 0,1 % Polymerlösung bezogen auf Wirksubstanz |
| Durchführung: | 100 ml der Testlösung A werden in die Lupolen-Becher vorgelegt, 2 - 4 ml 0,1%ige Polymerlösung zudosiert (10 - 20 ppm) und anschließend 100 ml der Testlösung B zugefügt. Nach Verschliessen der Becher stellt man sie für 24 Stunden bei 70°C in das Schüttelbad. Nach dem Abkühlen (ca. 1 Std.) werden die Probelösungen über einen Mem-branfilter (0,45 *µ*m) abgesaugt. Nun wird die inhibierte Phosphonat-Menge mittels Dr. Lange Fertigtest LCK 350 bestimmt. |

### Konzentration

| | | |
|---|---|---|
| der Prüflösung: | GH | = 5,4 mmol/l |
| | KH | = 6,42 mmol/l |
| | PO₄ | = 10 ppm |
| | Polymer | = 10 - 20 ppm Wirksubstanz |

**Tabelle: Inhibierung [%]**

| Konzentration | 10 ppm | 20 ppm | 30 ppm |
|---|---|---|---|
| Taurin-modifiziertes Polymer (erfindungsgemäß) | 70 | 94 | 100 |
| Noramer 2000 (Rohm & Haas) (nicht erfindungsgemäß) | 52 | 84 | 89 |

Bei dem Polymer Noramer 2000 (Rohm & Haas) handelt es sich um ein Copolymer aus Acrylsäure (80 %) und 2-Acrylamido-2-methylpropan-sulfonsäure (AMPS) (20 %).

Das erfindungsgemäße Polymer weist eine erhöhte Calciumphosphat- und -phosphonat-Inhibierung gegenüber dem Polymer des Standes der Technik auf. Diese Wirkung ist insbesondere bei Verwendung unterstöchiometrischen Mengen ausgeprägt.

### 3. Beispiele für Formulierungen zur Wasserbehandlung, insbesondere für Kühlwasser

### a) Polymer/Zink-Formulierung (frei von Phosphat)

| | | | |
|---|---|---|---|
| i) | erfindungsgemäßes Polymer | 40 % | (Belagsverhinderer, Zinkstabilisierung) |
| ii) | Zinkchlorid | 25 % | (Korrosionskontrolle) |
| iii) | Tolyltriazol | 0,5 % | (Korrosionskontrolle) |
| iv) | Entschäumer | 2 % | (Benetzung) |
| v) | Biozid | | (Mikroorganismenkontrolle) |

### b) organische Formulierung (frei von Phosphat und Schwermetallen)

| | | |
|---|---|---|
| i) | erfindungsgemäßes Polymer 20 - 25 % | (Phosphonatstabilisierung, Dispergierung von Schlamm) |
| ii) | Phosphonat (HEDP + 10 - 20 % PBTC) | (Belagsverhinderer, Korrosionsinhibierung) |
| iii) | Tolyltriazol 2 - 5 % | (Korrosionskontrolle) |
| iv) | Entschäumer 1- 3 % | (Benetzung) |
| v) | Biozid | (Mikroorganismenkontrolle) |

| | | |
|---|---|---|
| HEDP = 1-Hydroxyethan-1,1-diphosphonsäure, Natriumsalz PBTC = 2-Phosphonobutan-1,2,4-tricarbonsäure, Natriumsalz | | |

### c) Phosphat/Phosphonatformulierung

| | | | |
|---|---|---|---|
| i) | erfindungsgemäßes Polymer | 20 % | (Phosphatinhibierung, Phosphontainhibierung) |
| ii) | Phosphat/Phosphonat | 5 - 15 % | (Korrosionskontrolle, Belagsverhinderer) |
| iii) | Tolyltriazol | 2 - 5 % | (Korrosionskontrolle) |
| iv) | Entschäumer | 1 - 3 % | (Benetzung) |

### 4. Bestimmung des mittleren Molekulargewichts

Die Bestimmung des gewichtsmittleren Molekulargewichtes erfolgte durch Gel-Permeations-Chromatographie (= GPC) bei Raumtemperatur mit wässrigen Elutionsmitteln (0,08 m TRIS-Puffer (TRIS = Tris(hydroxymethyl)aminomethan) mit pH = 7 in destilliertem Wasser + 0,15 m NaCl + 0,01 m NaN₃). Die Proben besaßen eine Konzentration von c = 0,1 Massen-%, das Injektionsvolumen betrug Vᵢₙⱼ = 200 µL. Die Kalibrierung erfolgte mit einer breit verteilten Natrium-Polyacrylat-Kalibriermischung. Die Chromatographiesäulenkombination bestand aus Waters Ultrahydrogel 1000, 500, 500 und TSK PW-XL 5000 (Fa. TosoHaas). Zur Detektion wurde ein Differentialrefrakometer eingesetzt.

## Patentansprüche

1. (Meth)acrylsäurecopolymer, umfassend
(a) 50 bis 80 Gew.-% eines Poly(meth)acrylsäure-Grundgerüsts,
(b) 1 bis 40 Gew.-% mindestens einer an das Grundgerüst gebundenen und/oder in das Grundgerüst eingebundenen Einheit ausgewählt aus der Gruppe, bestehend aus Isobuteneinheiten, Terelactoneinheiten und Isopropanoleinheiten,
(c) mindestens 5 Gew.-% Amideinheiten auf Basis von Aminoalkylsulfonsäuren,
wobei das Gesamtgewicht der Einheiten in dem sulfongruppenhaltigen Polymer 100 Gew.-% beträgt und alle Gewichtsangaben auf das sulfongruppenhaltige Polymer bezogen sind.

2. (Meth)acrylsäurecopolymer nach Anspruch 1, **dadurch gekennzeichnet, dass** das gewichtsmittlere Molekulargewicht des sulfongruppenhaltigen Polymers 1.000 bis 20.000 g/mol beträgt.

3. Verfahren zur Herstellung von (Meth)acrylsäurecopolymeren, **gekennzeichnet durch** die folgenden Verfahrensschritte:
(1) radikalische Polymerisation von (Meth)acrylsäure in Gegenwart von Isopropanol und gegebenenfalls Wasser, wobei ein Polymer I resultiert, und
(2) Amidierung des aus Verfahrensschritt (1) stammenden Polymers I **durch** Umsetzung mit mindestens einer Aminoalkansulfonsäure.

4. Verfahren nach Anspruch 3, **dadurch gekennzeichnet, dass** Verfahrensschritt (1) bei Temperaturen von 100 bis 200°C durchgeführt wird.

5. Verfahren nach Anspruch 3 oder 4, **dadurch gekennzeichnet, dass** Verfahrensschritt (2) bei Temperaturen von 140 bis 250°C durchgeführt wird.

6. Verfahren nach einem der Ansprüche 3 bis 5, **dadurch gekennzeichnet, dass** das Molverhältnis von Monomeren in Polymer I zu Aminoalkansulfonsäure 15 zu 1 bis 2 zu 1 beträgt.

7. (Meth)acrylsäurecopolymere, erhältlich nach einem Verfahren gemäß den Ansprüchen 3 bis 6.

8. Verfahren zur Stabilisierung von Phosphaten und/oder Phosphonaten und/oder Zinkionen in wässrigen Systemen, wobei dem System ein Polymer gemäß einem der Ansprüche 1 oder 2 und/oder 7 zugesetzt wird.

9. Verwendung von (Meth)acrylsäurecopolymeren gemäß einem der Ansprüche 1 oder 2 und/oder 7 zur Wasserbehandlung, Scaleinhibierung bei der Erdölförderung und/oder Korrosionsinhibierung in wässrigen Systemen.

10. Formulierung zur Wasserbehandlung, Scale-Inhibierung bei der Erdölförderung und/oder Korrosionsinhibierung, enthaltend (Meth)acrylsäurecopolymere gemäß einem der Ansprüche 1 oder 2 und/oder 7.

## Claims

1. A (meth)acrylic acid copolymer comprising
(a) from 50 to 80% by weight of a poly(meth)acrylic acid basic structure,
(b) from 1 to 40% by weight of at least one unit which is bound to the basic structure and/or is bound into the basic structure and is selected from the group consisting of isobutene units, terelactone units and isopropanol units and
(c) at least 5% by weight of amide units based on aminoalkylsulfonic acids,
the total weight of the units in the sulfone-containing polymer being 100% by weight, and all weights being based on the sulfone-containing polymer.

2. The (meth)acrylic acid copolymer according to claim 1, wherein the weight-average molecular weight of the sulfone-containing polymer is from 1 000 to 20 000 g/mol.

3. A process for preparing (meth)acrylic acid copolymers, which comprises the following process steps:
(1) free-radical polymerization of (meth)acrylic acid in the presence of isopropanol and, if appropriate, water, with a polymer I resulting, and
(2) amidating the polymer I originating from process step (1) by reaction with at least one aminoalkanesulfonic acid.

4. The process as claimed in claim 3, wherein process step (1) is carried out at temperatures of from 100 to 200°C.

5. The process as claimed in claim 3 or 4, wherein process step (2) is carried out at temperatures of from 140 to 250°C.

6. The process as claimed in any of claims 3 to 5, wherein the molar ratio of monomers in polymer I to aminoalkanesulfonic acid is from 15:1 to 2:1.

7. A (meth)acrylic acid copolymer obtainable by a process as claimed in claims 3 to 6.

8. A process for stabilizing phosphates and/or phosphonates and/or zinc ions in aqueous systems, which comprises adding to the system a polymer as claimed in any of claims 1 or 2 and/or 7.

9. The use of (meth)acrylic acid copolymers as claimed in any of claims 1 or 2 and/or 7 for watertreatment, scale inhibition in mineral oil extraction and/or corrosion inhibition in aqueous systems.

10. A formulation for watertreatment, scale inhibition in mineral oil extraction and/or corrosion inhibition, comprising (meth)acrylic acid copolymers as claimed in any of claims 1 or 2 and/or 7.

## Revendications

1. Copolymère d'acide (méth)acrylique, comportant :
(a) 50 à 80 % en poids d'un squelette de base d'acide poly(méth)acrylique,
(b) 1 à 40 % en poids d'au moins une unité liée au squelette de base et/ou intégrée dans le squelette de base, choisie dans le groupe constitué des unités isobutène, des unités térélactone et des unités isopropanol,
(c) au moins 5 % en poids d'unités amide à base d'acides aminoalkylsulfoniques,
dans lequel le poids total des unités dans le polymère contenant des groupes sulfone est de 100 % en poids et toutes les indications de poids se rapportent au polymère contenant des groupes sulfone.

2. Copolymère d'acide (méth)acrylique selon la revendication 1, **caractérisé en ce que** le poids moléculaire moyen pondéré du polymère contenant des groupes sulfone est de 1000 à 20 000 g/mol.

3. Procédé de préparation de copolymères d'acide (méth)d'acrylique, **caractérisé par** les étapes de procédé suivantes :
(1) polymérisation par voie radicalaire d'acide (méth)acrylique en présence d'isopropanol et éventuellement d'eau, donnant lieu à un polymère I, et
(2) amidation du polymère I issu de l'étape de procédé (1) par réaction avec au moins un acide aminoalcanesulfonique.

4. Procédé selon la revendication 3, **caractérisé en ce que** l'étape de procédé (1) est mise en oeuvre à des températures de 100 à 200°C.

5. Procédé selon la revendication 3 ou 4, **caractérisé en ce que** l'étape de procédé (2) est mise en oeuvre à des températures de 140 à 250°C.

6. Procédé selon l'une quelconque des revendications 3 à 5, **caractérisé en ce que** le rapport molaire des monomères dans le polymère I sur l'acide aminoalcanesulfonique est de 15:1 à 2:1.

7. Copolymères d'acide (méth)acrylique pouvant être obtenus par un procédé selon les revendications 3 à 6.

8. Procédé de stabilisation de phosphates et/ou de phosphonates et/ou d'ions de zinc dans des systèmes aqueux, dans lequel un polymère selon l'une quelconque des revendications 1 ou 2 et/ou 7 est ajouté au système.

9. Utilisation de copolymères d'acide (méth)acrylique selon l'une quelconque des revendications 1 ou 2 et/ou 7 pour le traitement de l'eau, l'inhibition de la formation de paraffine lors de l'extraction du pétrole et/ou l'inhibition de la corrosion dans des systèmes aqueux.

10. Formulation pour le traitement de l'eau, l'inhibition de la formation de paraffine lors de l'extraction du pétrole et/ou l'inhibition de la corrosion, contenant des copolymères d'acide (méth)acrylique selon l'une quelconque des revendications 1 ou 2 et/ou 7.
